(19) Europäisches Patentamt

European Patent Office

Office européen des brevets

(11) **EP 1 256 700 B1**

(12) **EUROPEAN PATENT SPECIFICATION**

(45) Date of publication and mention
of the grant of the patent:
**12.07.2006 Bulletin 2006/28**

(51) Int Cl.:
*F01N 3/20* (2006.01)     *F01N 9/00* (2006.01)
*F01N 3/08* (2006.01)

(21) Application number: **02008856.3**

(22) Date of filing: **19.04.2002**

(54) **Exhaust purification for internal combustion engine**

Abgasreinigung für einem Verbrennungsmotor

Purification des gaz d'échappement pour moteur à combustion interne

(84) Designated Contracting States:
**DE FR GB**

(30) Priority: **11.05.2001 JP 2001141494**

(43) Date of publication of application:
**13.11.2002 Bulletin 2002/46**

(73) Proprietor: **NISSAN MOTOR CO., LTD.**
**Yokohama-shi,**
**Kanagawa 221-0023 (JP)**

(72) Inventors:
• **Shiino, Toshikazu**
**Chigasaki-shi,**
**Kanagawa 253-0064 (JP)**

• **Hotta, Isamu**
**Yokosuka-shi,**
**Kanagawa 237-0076 (JP)**
• **Tsuchida, Hirofumi**
**Yokosuka-shi,**
**Kanagawa 239-0806 (JP)**

(74) Representative: **Grünecker, Kinkeldey,**
**Stockmair & Schwanhäusser**
**Anwaltssozietät**
**Maximilianstrasse 58**
**80538 München (DE)**

(56) References cited:
EP-A- 0 935 055          EP-A- 1 027 919
WO-A-99/49190           DE-A- 19 933 736
FR-A- 2 790 789         US-B1- 6 354 079

**Description**

BACKGROUND OF THE INVENTION

The present invention relates to a technique for purifying the exhaust of an internal combustion engine used, for example, for a vehicle, and more specifically to system and/or method suitable for purifying NOx in the exhaust comprising an NOx trap for trapping and releasing NOx and an NOx reducing catalyst for reducing NOx with a reducing agent in exhaust and a reductant supply section for supplying the reducing agent to the NOx reducing catalyst.

For lean-burn engines, an aftertreatment device including an NOx trap (catalyst) is effective. This device temporarily traps (adsorb or absorb) NOx, and release (or desorb) the trapped NOx in a predetermined condition (as disclosed in United States Patent 5,473,887 corresponding to Japanese Patent No. 2600492). For example, the NOx trap contains at least one substance selected from alkali metals, alkali earth metals, and rare earth metals, and at least one noble metal (or precious metal), supported on a carrier. The NOx trap or NOx trap catalyst of this type is capable of trapping NOx in the case of inflowing exhaust being lean, and releasing NOx in the case of inflowing exhaust being rich or stoichiometric. Such a catalyst is inactive and hence insufficient in catalytic conversion in a low-temperature state after a start of an internal combustion engine. Furthermore, FR 279 0789 reveals an emission control apparatus having a first NOx reduction/absorbion catalyst in the exhaust duct of a lean bum internal combustion engine and a second selective reduction catalyst. The first catalyst absorbs NOx when the air fuel ratio is leaner than a theoretical ratio and releases NOx when oxygen in the exhaust decreases. An ammonia reducing component is added on detection of NOx being released from the NOx absorbsion catalyst by a NOx detecting sensor downstream of the NOx trap to enable selective NOx reduction by the second selective reduction catalyst.
DE 19933736 discloses an arrangement for purifying an internal combustion engine exhaust gas comprising a catalyst system, the exhaust gas flow consisting of an NOx store, and oxidation catalyst and a NOx reduction catalyst. Reduction agent supply for reducing NOx in the NOx reduction catalyst are supplied upstream of the NOx reduction catalyst and controlled by a temperature sensor being located upstream of the NOx trap to ensure sufficient temperature for vaporizing the reducing agent.

SUMMARY OF THE INVENTION

An object of the present invention is to provide system and/or method for removing NOx more efficiently and reliably.

According to the apparatus aspect of the present invention, the above object is solved by an exhaust purifying system an internal combustion engine, comprising a NOx trap for trapping and releasing NOx, a NOx reducing catalyst for reducing NOx with a reducing agent in exhaust, and a reductant supply section for supplying the reducing agent to the NOx reducing catalyst, wherein the NOx trap includes a component for trapping NOx at low temperatures lower than or equal to 200°C and releasing NOx at higher temperatures that the exhaust purifying system further comprises a NOx release monitor section for monitoring whether a NOx release condition of the NOx trap is satisfied, wherein the NOx release monitor section includes a temperature sensor, in the NOx trap, for sensing the temperature of the NOx trap; and that the reductant supply section is configured to supply the reducing agent when the NOx release condition is satisfied.

According to the method aspect of the present invention, the above object is solved by an exhaust purifying method for an internal combustion engine equipped with an exhaust system including a NOx trap and a NOx reducing catalyst, comprising a reducing agent supplying step of supplying a reducing agent to the NOx reducing catalyst, wherein the exhaust purifying method further comprises a monitoring step of monitoring whether a NOx release condition is satisfied, wherein the NOx release monitor section includes a temperature sensor, in the NOx trap, for sensing the temperature of the NOx trap, for the NOx trap of a type for trapping NOx at low temperatures lower than or equal to 200°C and releasing NOx at higher temperatures; and that, in the reducing agent supplying step, the reducing agent is supplied when the NOx release condition is satisfied.
Further preferred embodiments of the present invention are laid down in the further subclaims.
In the following the present invention is explained in greater detail by means of several embodiments in conjunction with the accompanying drawings wherein:

BRIEF DESCRIPTION OF THE DRAWINGS

FIG. 1 is a schematic view showing an exhaust purifying system according to a first embodiment of the present invention.

FIG. 2 is a flowchart showing a control process performed by the system of FIG. 1, for estimation of NOx release condition and control of reductant supply.

FIGS. 3A, 3B and 3C are graphs showing relationships of an NOx release quantity, respectively, with respect to the catalyst temperature Tc, the flow rate of exhaust flowing through the catalyst, and the amount of NOx trapped in the NOx trap.

FIG. 4 is a schematic view showing an exhaust purifying system according to a second embodiment of the present invention.

FIG. 5 is a flowchart showing a control process performed by the system of FIG. 4, for calculation of a reductant quantity required for reduction of released NOx.

FIGS. 6A, 6B and 6C are graphs showing relationships of an NOx concentration in the exhaust, respectively, with respect to the pair of engine speed and load, the air-fuel ratio A/F, and the engine coolant temperature Tw.

FIGS. 7A, 7B and 7C are graphs showing relationships of an NOx trap rate, respectively, with respect to the catalyst temperature Tc, the flow rate of exhaust flowing through the catalyst, and the amount of NOx trapped in the catalyst.

FIGS. 8 and 9 show a flowchart of a control process performed by the system of FIG. 4, for calculation of target air-fuel ratio and target fresh air quantity.

FIGS. 10 and 11 show a flowchart of an engine control process performed by an exhaust purifying engine system according to a third embodiment of the present invention.

FIG. 12 is a view showing a multilayer structure having an NOx trap (catalyst) layer and a noble-metal catalyst layer, employed in the second embodiment.

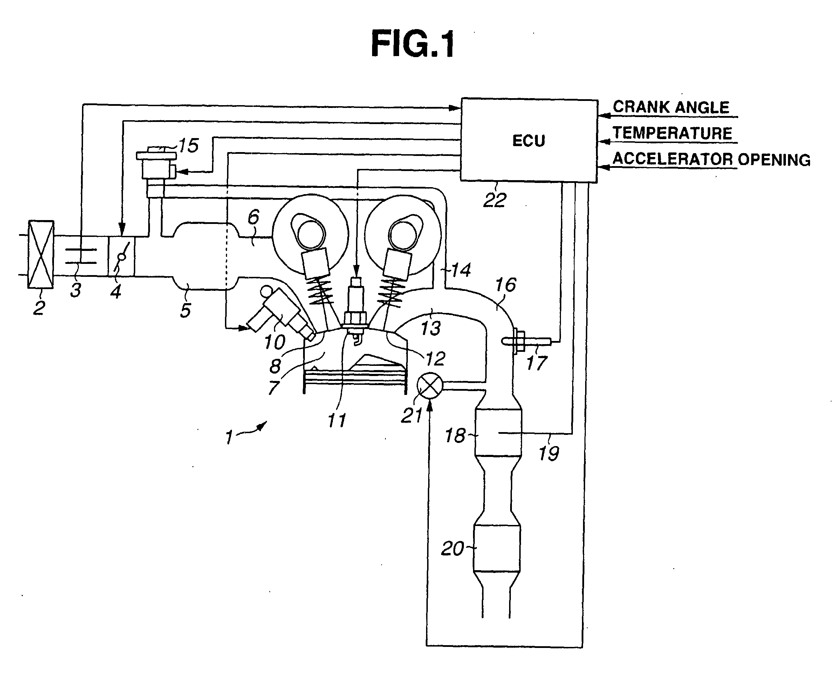

FIG. 1 shows an exhaust purifying system according to a first embodiment of the present invention.

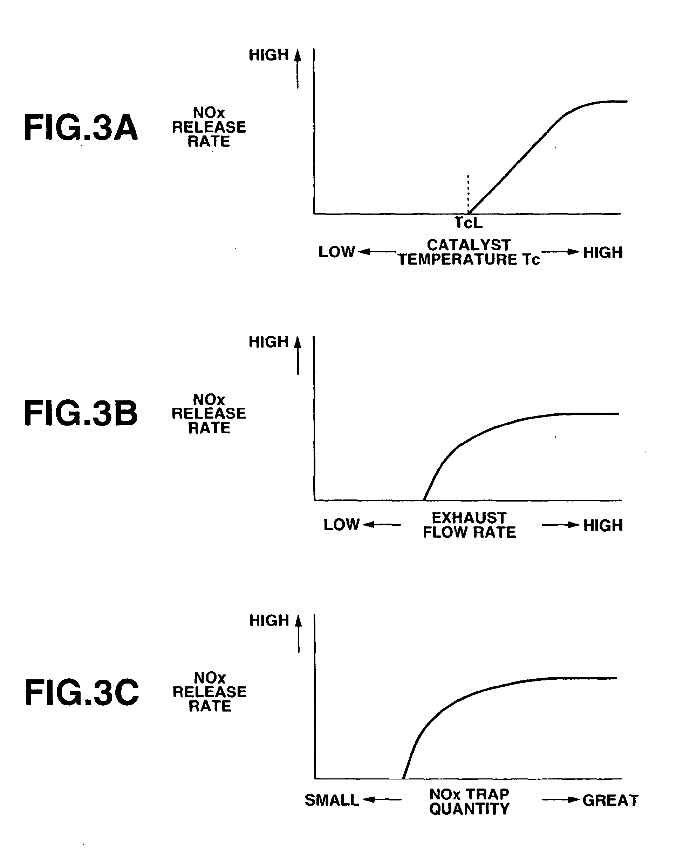

An NOx trap catalyst of one example contains at least one substance selected from alkali metals, alkali earth metals, and rare earth metals, and at least one noble metal (or precious metal), supported on a carrier. When the temperature of the exhaust is low as in operation immediately after a cold start of the engine, however, the NOx trap catalyst is inactive and insufficient in performance of exhaust purification. Under investigation by the inventors of the present application is a catalyst which can be activated at lower temperatures. In particular, catalyst of zeolite, or catalyst containing zeolite is capable of trapping NOx in the presence of oxygen at low temperatures (lower than or equal to 200 °C, for example). The NOx trap or NOx trap catalyst of this type releases NOx from the trap when the temperature of the catalyst becomes higher or when the flow quantity of exhaust flowing through the catalyst increases (as shown in FIGS. 3A and 3B). The exhaust purifying system shown in FIG. 1 is arranged to reduce and purify NOx released from a catalyst of such a type efficiently and reliably.

In an intake passage 6 of an engine 1 shown in FIG. 1, there are provided an air cleaner 2, an air flowmeter (or air flow sensor) 3, a throttle valve 4 and a collector section 5. Air flowmeter 3 measures an intake air quantity. The opening (degree) of throttle valve 4 is controlled to control the intake air quantity.

In each cylinder of engine 1, there are provided a fuel injector 10 for injecting fuel into a combustion chamber 7, and a spark plug 11 for spark ignition. Fuel is injected from injector 10 into air inducted through an intake valve 8 to form air fuel mixture, and the air fuel mixture is compressed in combustion chamber 7 and ignited by spark of spark plug 11.

Exhaust of engine 1 is discharged from combustion chamber 7 through an exhaust valve 12 into an exhaust port 13. An EGR passage 14 is connected with exhaust port 13, and designed to recirculate part of the exhaust to collector section 5 on the intake side. An EGR valve 15 is disposed in EGR passage 14, and constructed to regulate the quantity (EGR quantity) of exhaust gases recirculated to the intake side.

An air-fuel ratio sensor 17 is disposed in an exhaust manifold 16 connected on the downstream side of exhaust port 13, and arranged to sense the exhaust air-fuel ratio.

A reductant supplying device 21 is disposed in the exhaust passage on the downstream side of air-fuel ratio sensor 17. Reductant supplying device 21 is a device for supplying one or more reducing agents such as hydrocarbon into the exhaust passage of the exhaust system.

First and second exhaust purifying catalysts 18 and 20 are provided in the exhaust passage on the downstream side of reductant supplying device 21. First catalyst 18 is an NOx trap which, in this embodiment, is a zeolite catalyst containing zeolite (such as zeolite beta, zeolite A, zeolite Y, zeolite X, ZSM-5, mordenite and ferrierite. Second catalyst 20 is disposed on the downstream side of zeolite catalyst 18. Second catalyst 20 according to this embodiment is a noble-metal catalyst containing at least one noble metal (such as platinum, palladium and/or rhodium).

A temperature sensor 19 is provided in zeolite catalyst 18 for sensing the temperature of zeolite catalyst 18 (or the temperature of the exhaust).

An engine control unit (ECU) 22 receives signals from air flowmeter 3, air-fuel ratio sensor 17 and temperature sensor 19. ECU 22 further receives signals from a crank angle sensor, engine coolant temperature sensor and accelerator opening sensor. In accordance with information collected in this way, ECU 22 controls the throttle opening (degree), fuel injection quantity, fuel injection timing, ignition timing, EGR quantity (or flow rate) and the supply of reducing agent. ECU 22 serves as a controller of an engine control system.

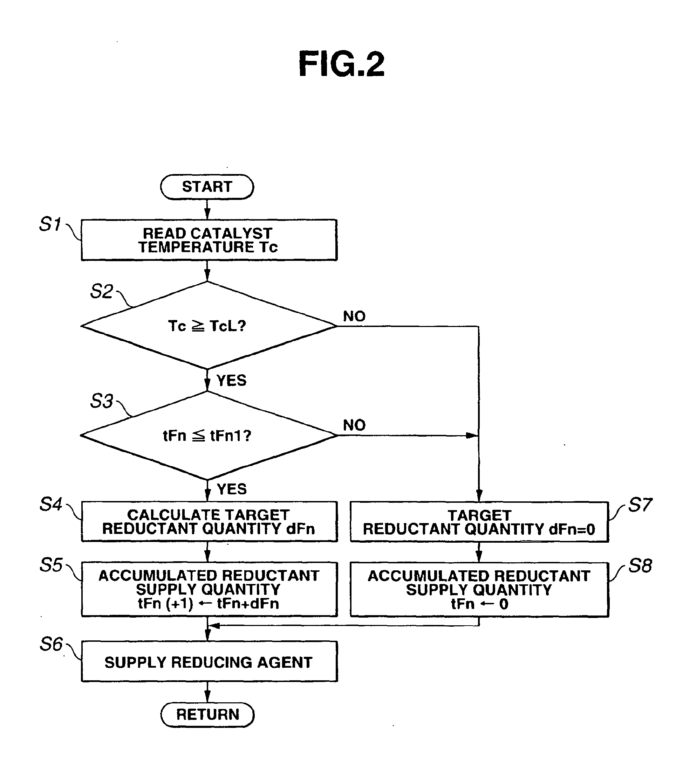

FIG. 2 shows a process performed by ECU 22 for estimating NOx desorption or release from zeolite catalyst 18 and for controlling the supply of reducing agent to reduce and purify NOx released from zeolite catalyst 18.

ECU 22 reads the temperature Tc of zeolite catalyst 18 at step S1, and compares catalyst temperature Tc with a predetermined temperature TcL at step S2. This temperature TcL in this example is a constant value for detecting NOx release from zeolite catalyst 18. Temperature TcL is set equal to a temperature from which the desorption or release of NOx trapped in zeolite catalyst 18 starts. A temperature at which the zeolite catalyst starts releasing NOx is determined experimentally and the predetermined temperature TcL is set equal to the experimentally determined temperature. FIG. 3A shows a relationship, confirmed by experiments, between the release (rate) of NOx from the zeolite catalyst and the catalyst temperature Tc. The NOx release starts at temperature TcL.

When temperature Tc of zeolite catalyst 18 is higher than or equal to predetermined temperature TcL, ECU 22 assumes that catalyst 18 is in the state of releasing NOx, and proceeds from step S2 to step S3, to examine whether an accumulated reductant supply quantity tFn is greater than a predetermined quantity tFn1. Accumulated reductant supply quantity tFn is a quantity calculated at step S5 in the previous (most recent) control execution. Predetermined quantity tFn1 is a constant defining an upper limit of the quantity of the reducing agent supplied to the exhaust system. In this example, predetermined quantity tFn1 is set equal to a quantity necessary and sufficient for reducing NOx in quantity which zeolite catalyst 23 can trap. When accumulated reductant supply quantity tFn is smaller than or equal to predetermined quantity tFn1, ECU 22 proceeds to step S4.

At step S4, ECU 22 calculates a target reductant quantity dFn. One way to determine target reductant quantity dFn is to set target reductant quantity dFn as a predetermined constant value. Alternatively, it is possible to estimate an NOx release quantity from catalyst temperature Tc by using the relationship between zeolite catalyst temperature Tc and NOx release rate as shown in FIG. 3A, and prepare a data table of a reductant quantity required to reduce the estimated NOx release quantity. In this case, target reductant quantity dFn is determined from catalyst temperature Tc obtained at step S1, by lookup from the data table.

At step S5, ECU 22 updates the accumulated reductant supply quantity tFn by determining a new value tFn(+1) according to the following equation.

$$\text{tFn}(+1) = \text{tFn} + \text{dFn}$$

At step S6 following step S5, the reducing agent in the quantity equaling target reductant quantity dFn is supplied into the exhaust passage from reductant supplying device 21.

Step S7 is reached from step S2 when zeolite catalyst temperature Tc is lower than predetermined temperature TcL, and hence ECU assumes that zeolite catalyst 18 is not in the state of releasing NOx. Step S7 is also reached from step S3 when accumulated reductant supply quantity tFn is greater than predetermined quantity tFn1 and it is assumed that the reducing agent is supplied in a quantity necessary and sufficient for the NOx release quantity. ECU 22 clears the target reductant quantity dFn to zero (dFn=0) at step S7, and then resets the accumulated reductant supply quantity to zero (tFn=0) at next step S8. In this case, the system does not carry out the supply of the reducing agent.

In this way, the exhaust purifying system according to this embodiment can detect or estimate the release or desorption of NOx from zeolite catalyst 18 with a simple configuration, and supply the reducing agent in a calculated quantity at the time of the NOx release. Therefore, this system can reduce and purify the released NOx in the zeolite catalyst and noble-metal catalyst, and thereby prevent emission of NOx to the atmosphere.

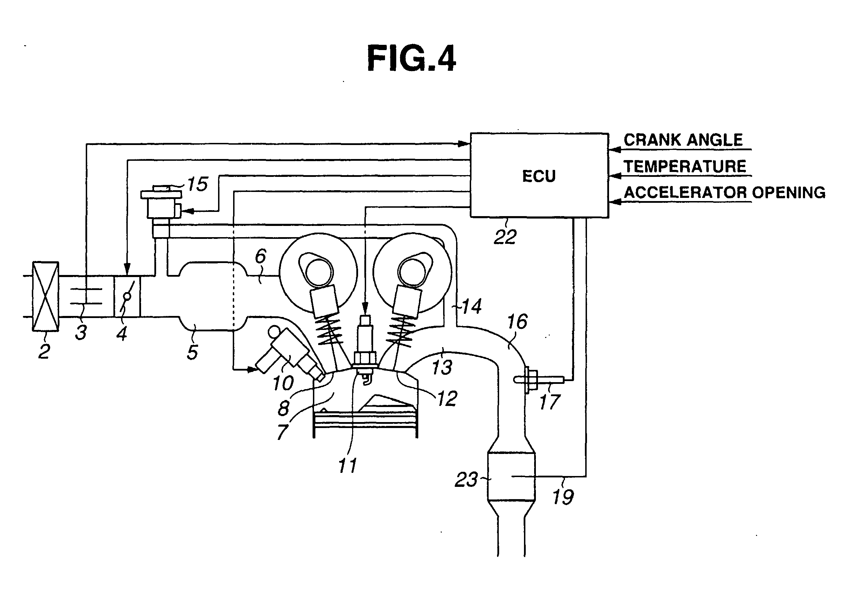

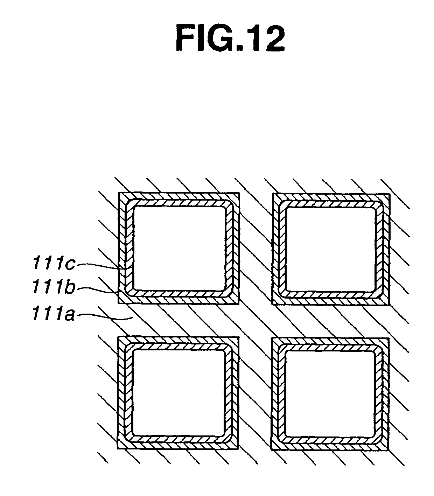

FIG. 4 shows an exhaust purifying system according to a second embodiment of the invention. The catalyst system of Fig. 4 includes only one catalyst, and there is no reductant supplying device. In other respects, the system of FIG. 4 is substantially identical to the system of FIG. 1 (as indicated by the same reference numerals). An exhaust purifying catalyst 23 employed in the second embodiment contains at least one noble metal as well as zeolite. In this example, exhaust purifying catalyst 23 is composed of an inner layer 111b having the same composition as zeolite catalyst 18 employed in the first embodiment, and a surface layer 111c having the same composition as noble-metal catalyst 19 in the first embodiment, as shown in FIG. 12. The inner and surface layers are coated on a signal carrier 111a. It is optional to employ a catalyst containing noble-metal powder mixed in zeolite.

In this arrangement, the noble-metal containing catalyst can be disposed at a more upstream position exposed to higher temperatures. Therefore, this arrangement can facilitate the activation of the catalyst and improve the efficiency in exhaust purification. Moreover, this catalyst system is advantageous in compactness and cost, as compared to the catalyst system having two separate catalysts.

Instead of providing the reductant supplying device, the exhaust purifying system of the second embodiment supplies the reducing agent by increasing the fuel injection quantity of fuel injector 10 by enriched injection of an increased amount or additional injection.

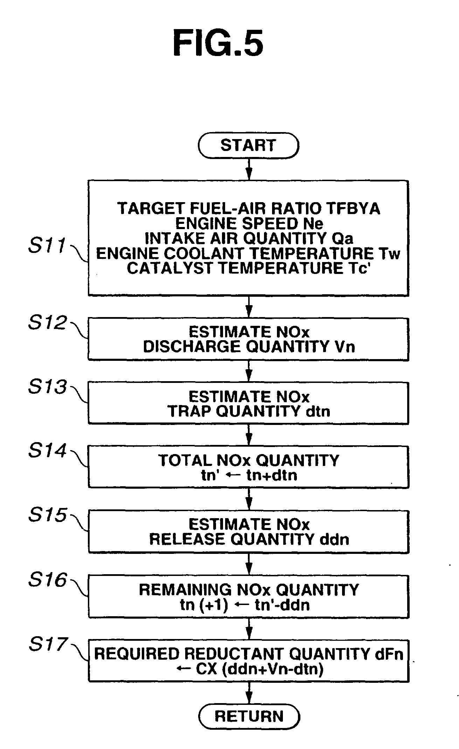

FIG. 5 shows a control process according to the second embodiment, for estimation of NOx release quantity and computation of a reductant supply quantity for reduction and purification of released NOx.

At step S11, ECU 22 reads target fuel-air ratio TFBYA, engine revolution speed Ne, intake air quantity Qa, engine coolant temperature Tw, and catalyst temperature Tc' of exhaust purifying catalyst 23. Target fuel-air ratio TFBYA is the reciprocal of excess air factor $\lambda$ (lambda). The condition of TFBYA =1 means the stoichiometric air-fuel ratio, and the condition of TFBYA <1 means the lean condition.

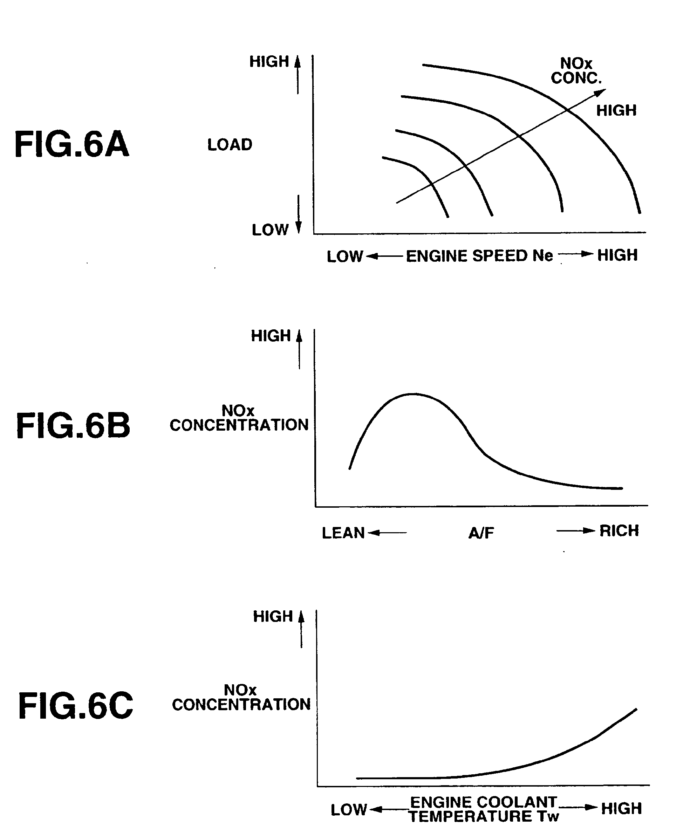

At step S12, ECU 22 estimates an NOx discharge quantity Vn in the following manner. NOx discharge quantity Vn is a quantity of NOx discharged from engine 1. The NOx concentration in the exhaust is related to engine operating conditions (engine speed Ne, load, air-fuel ratio A/F and engine coolant temperature Tw), as shown in FIGS. 6A~6C. Therefore, according to one estimation process, these relationships are stored in the form of data tables, and the estimation is carried out by lookup from the data tables in accordance with current values of the engine operating conditions obtained at step S11.

In another estimation process, an upstream NOx sensor is provided on the upstream side of catalyst 23, for sensing the NOx concentration in the exhaust directly , and the NOx discharge quantity is calculated by multiplication between the sensed NOx concentration and the intake air quantity Qa.

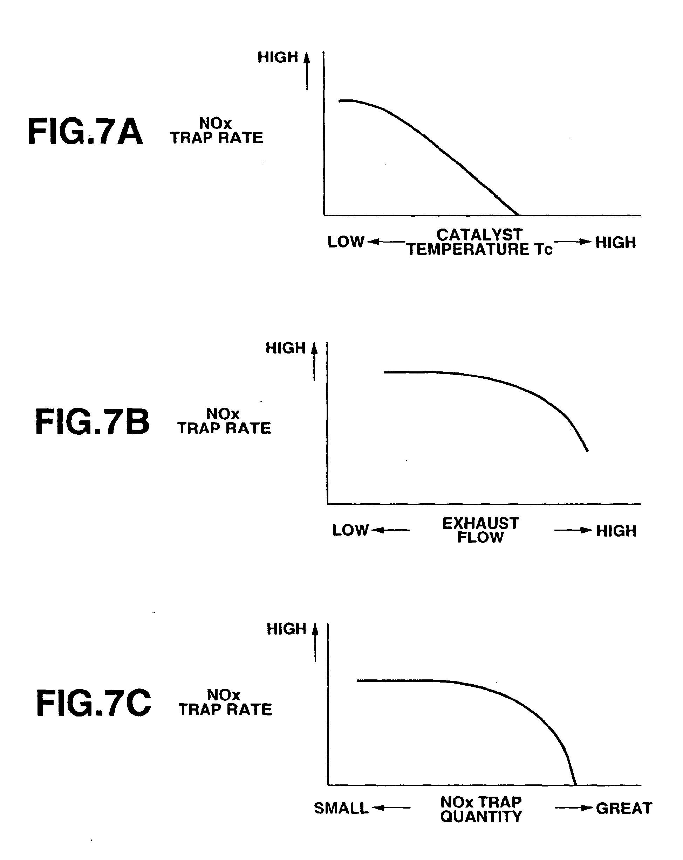

At step S13, ECU 22 estimates an NOx trap quantity dtn which is a quantity of NOx trapped by catalyst 23, in the following manner. FIGS. 7A, 7B and 7C show relationships, confirmed by experiments, of the NOx trap rate with respect to the catalyst temperature Tc, the flow rate of exhaust passing through catalyst 23, and the quantity of NOx already trapped in catalyst 23. These relationships are stored in the form of data tables, and the estimation is carried out in accordance with data obtained at step S11, and the total NOx trap quantity tn determined in the previous execution at step S16, by lookup from the data tables.

Another method employs upstream and downstream NOx sensors provided, respectively, on the upstream side and downstream side of catalyst 23 (or on the upstream side and downstream side of the zeolite catalyst when the zeolite catalyst is separate from the noble-metal catalyst). The NOx trap quantity is determined by multiplying a difference between the upstream side NOx concentration sensed by the upstream NOx sensor and the downstream side NOx concentration sensed by the downstream NOx sensor, by the intake air quantity Qa.

At step S14, ECU 22 calculates the total NOx trap quantity tn' (=tn+dtn) by adding the NOx trap quantity dtn determined at step S13, to the integrated NOx trap quantity tn determined in the previous execution. The total NOx trap quantity tn' is a total quantity of NOx trapped in catalyst 23.

At step S15, ECU 22 estimates an NOx release quantity ddn which is a quantity of NOx desorbed or released from catalyst 23, in the following manner. The NOx release quantity ddn is varied in dependence on catalyst temperature Tc', the flow rate of the exhaust passing through catalyst 23, and the NOx trap quantity dtn, as shown in FIGS. 3A, 3B and 3C. By using these relationships in the form of data tables, the estimation is carried out by lookup from the tables in accordance with values read at step S11 and the value estimated at step S13. It is possible to estimate the NOx release quantity ddn by using only any one of the above-mentioned parameters by table lookup. However, the use of two or more parameters can improve the accuracy of estimation.

At step S16, ECU 22 calculates a total remaining NOx trap quantity tn(+1) (=tn'-ddn) by subtracting the NOx release quantity ddn estimated at step S15, from the total NOx trap quantity tn' determined at step S14. The total remaining NOx trap quantity tn(+1) is a quantity of NOx stilled trapped after the desorption or release.

At step S17, ECU 22 calculates a required reductant quantity dFn required for reduction of the released NOx, in the following manner. The total NOx quantity in the exhaust on the downstream side of catalyst 23 is given by ddn (NOx release quantity) + Vn (NOx discharge quantity) - dtn (NOx trap quantity). Therefore, required reductant quantity dFn is determined by multiplying this quantity by a constant C for conversion of units.

$$dFn = C \times (ddn + Vn - dtn)$$

In this way, this system computes the reductant quantity required for reduction of the released NOx.

The exhaust purifying system of the second embodiment supplies an additional amount of fuel through fuel injector 10 as reducing agent without using any special device for the supply of reducing agent. In this example, the system determines the fuel injection quantity by addition, to the base fuel injection quantity in accordance with target fuel-air ratio TFBYA determined in the following control procedure and the intake air quantity Qa, of the additional fuel quantity (the required reductant quantity dFn) for reduction of the released NOx, and performs the injection of the fuel in the thus-determined amount. It is possible to inject the additional fuel quantity corresponding to required reductant quantity dFn together with the base fuel injection quantity as a single injection, or alternatively to perform an additional injection on expansion stroke or exhaust stroke, for example.

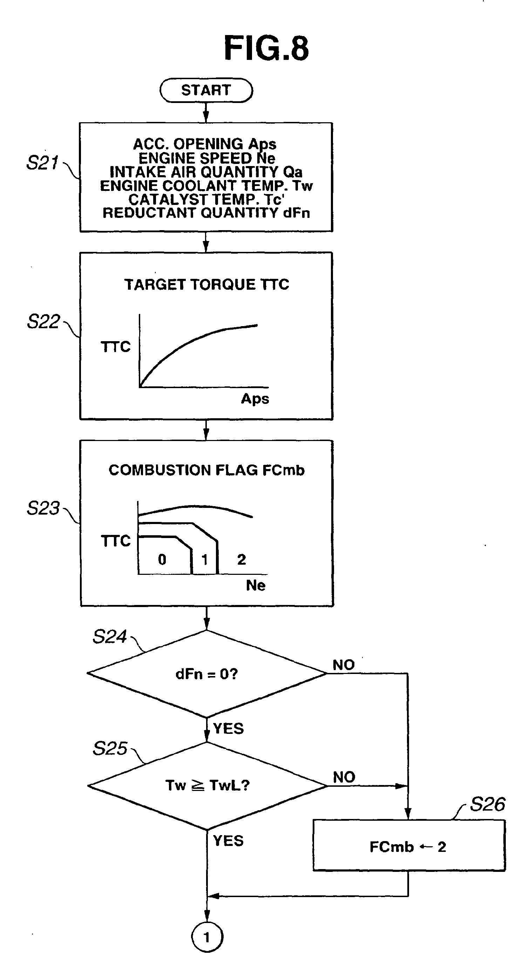

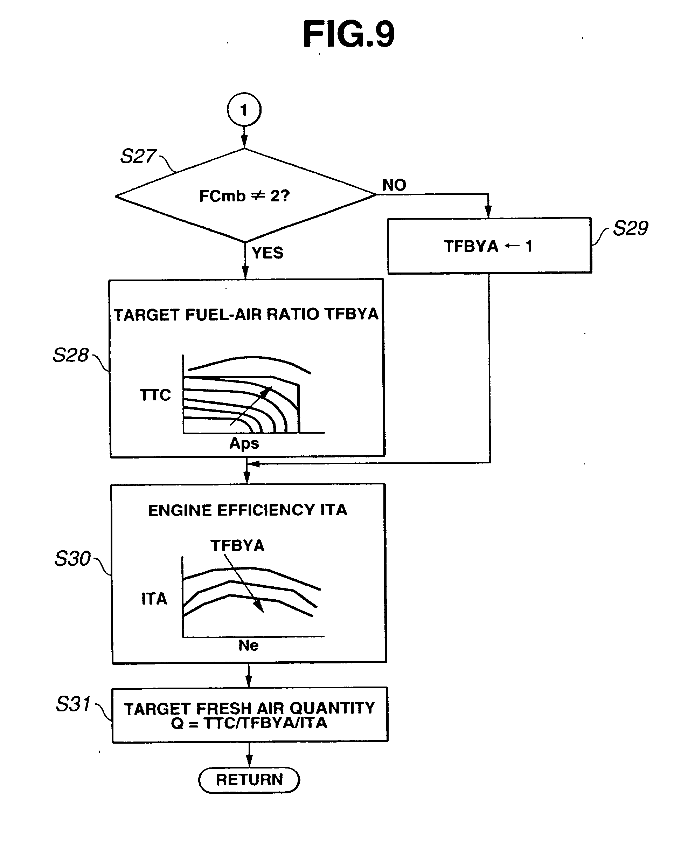

FIGS. 8 and 9 show a control flow for determining target fuel-air ratio TFBYA and controlling intake air quantity Qa.

At step S21, ECU 22 reads accelerator opening Aps, engine speed Ne, intake air quantity Qa, engine coolant temperature Tw, catalyst temperature Tc' and required reductant quantity dFn.

At step S22, ECU 22 determines target torque TTC in accordance with accelerator opening Aps obtained at step S21, by lookup from a table shown in step S22 of FIG. 8.

At step 23, ECU 22 determines the value of combustion flag FCmb by lookup from a map shown in step S23 of FIG. 8, in accordance with engine speed Ne obtained at step S21, and target torque TTC. In this example, combustion flag FCmb is 0, 1 or 2. This engine system performs the stratified charge lean combustion in the region of FCmb=0, the homogeneous lean combustion in the region of FCbmj=1, and the stoichiometric combustion at the stoichiometric ratio in the region of FCmb=2.

At step S24, ECU 22 examines whether the supply of the reducing agent is requested for reduction of released NOx, or not, by checking whether required reductant quantity dFn is equal to zero or not. When required reductant quantity dFn is equal to zero, ECU 22 proceeds to step S25.

At step S25, ECU 22 examines whether engine coolant temperature Tw is higher than or equal to a predetermined temperature TwL. If it is (Tw≥TwL), ECU 22 proceeds to step S27 of FIG. 9.

When required reductant quantity dFn is not equal to zero, and hence the catalyst system is in the state of desorbing or releasing NOx, then ECU 22 proceeds from step S24 to step S26, and sets combustion flag FCmb to 2 to set the engine operating mode to the stoichiometric combustion mode at the stoichiometric air-fuel ratio.

Step S26 is also reached from step S25 when engine coolant temperature Tw is lower than predetermined temperature TwL, and hence the lean combustion is considered to be inadequate for the stability. When the engine coolant temperature is low, this system inhibits the lean combustion, and instead performs the stoichiometric combustion by setting combustion flag FCmb to two at step S26.

At step S27, ECU 22 examines whether combustion flag FCmb is equal to two, or not. When combustion flag FCmb is not equal to two (FCmb≠2), indicating the lean combustion, then ECU 22 proceeds to step S28, and ECU 22 determines target fuel-air ratio TFBYA in accordance with engine speed Ne and target torque TTC, by lookup from a map shown in step S28 of FIG. 9.

When combustion flag FCmb is equal to two (FCmb=2), indicating the stoichiometric combustion, then ECU 22 proceeds from step S27 to step S29, and sets target fuel-air ratio TFBYA to one.

At step S30, ECU 22 determines an engine efficiency ITA in accordance with engine speed Ne and target fuel-air ratio TFBYA, by lookup from a map shown in step S30 of FIG. 9.

At step S31, ECU 22 determines a target fresh air quantity Q in accordance with engine efficiency ITA, target torque TTC and target fuel-air ratio TFBYA, according to the following equation.

$$Q = TTC/TFBYA/ITA$$

Then, ECU 22 controls the intake air quantity Qa by regulating the throttle valve opening degree in accordance with the computed target fresh air quantity Q, and fuel injector 10 is operated to inject fuel in the quantity of the base fuel injection quantity determined in accordance with target fuel-air ratio TFBYA and intake air quantity Qa, and the additional fuel injection quantity corresponding to required reductant quantity dFn.

By setting target fuel-air ratio TFBYA to the stoichiometric ratio at the time of supply of reducing agent for reduction of released NOx, the exhaust purifying system according to the second embodiment can reduce the amount of fuel (reducing agent) consumed by oxygen remaining in the exhaust, without being used as reducing agent, and thereby restrain degradation of the fuel economy. It is optional to set target fuel-air ratio TFBYA at the time of the supply of reducing agent into the rich region instead of the stoichiometric ratio.

Required reductant quantity dFn is determined in accordance with the total NOx quantity based on NOx release quantity ddn, NOx discharge quantity Vn, and NOx trap quantity dtn. Therefore, the system can purify NOx and prevents NOx emissions by supplying the reducing agent in the quantity corresponding to the required quantity dFn not only when NOx is released from the catalyst, but also when the NOx trap quantity becomes greater than the predetermined quantity and the NOx trap performance of catalyst 23 degrades.

The system configuration of FIG. 1 can be employed instead of the system of FIG. 4. In this case, the reductant supplying device 21 supplies the reducing agent in the quantity corresponding to required reductant quantity dFn.

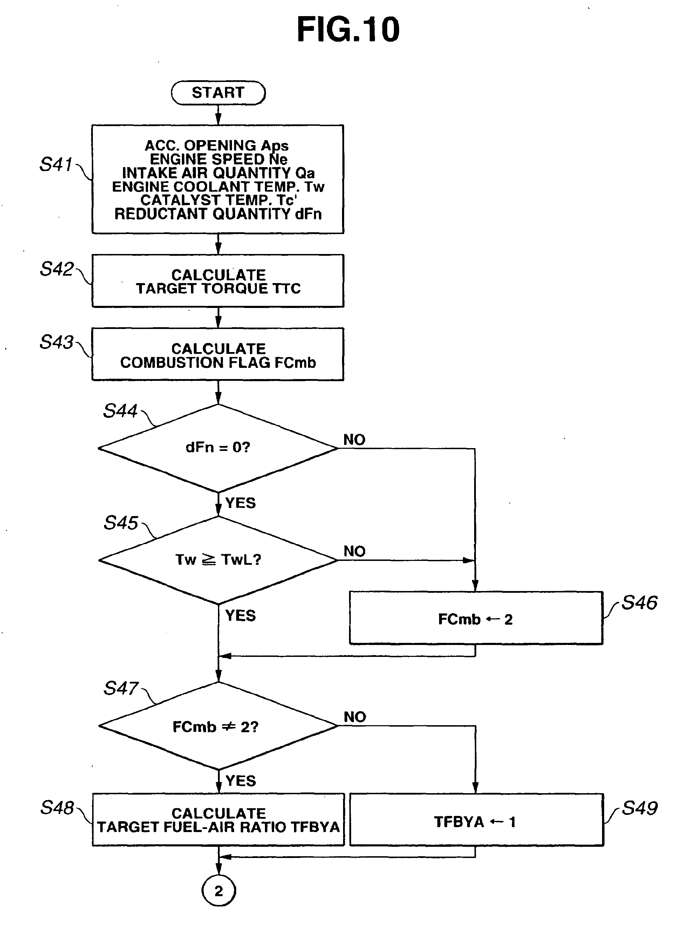

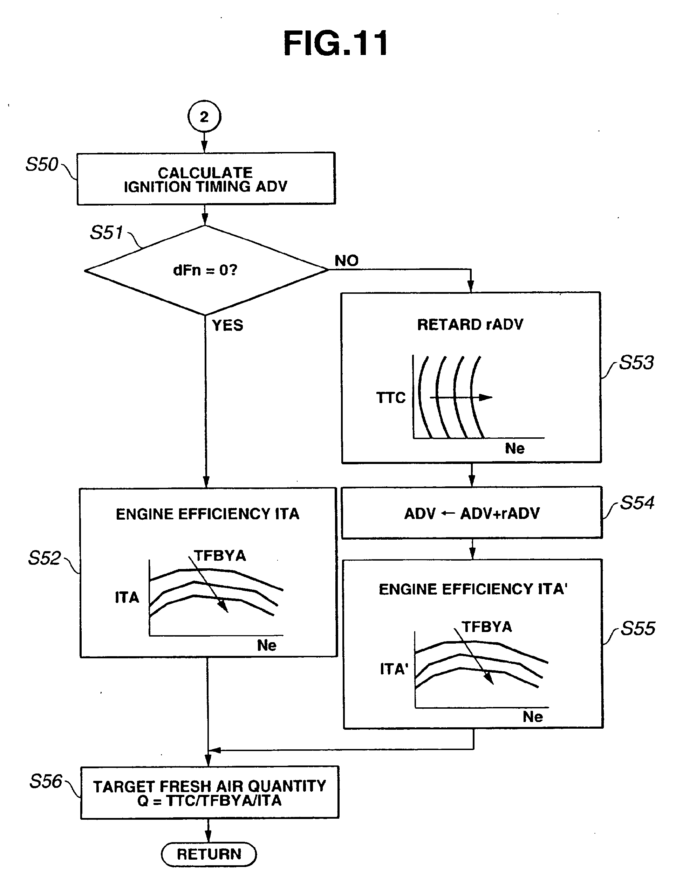

FIGS. 10 and 11 show a control flow according to a third embodiment of the present invention. The system according to the third embodiment is arranged to promote the release of NOx at the time of reductant supply, though the system is substantially identical in configuration to the system shown in FIG. 4, and in procedure for computing the reductant quantity to the procedure of FIG. 5. It is optional to employ the system configuration of the first embodiment, instead.

Steps S41 to S49 are substantially identical to steps S21 to S29 in the flowchart of FIGS. 8 and 9.

At step S50 following steps S48 or S49, ECU 22 calculates an ignition timing ADV. In this example, ignition timing ADV is set at MBT (ignition timing for best output and best fuel consumption). ECU 22 determines MBT timing by lookup from map or by calculation in accordance with engine speed Ne, target torque TTC, and target fuel-air ratio TFBYA.

At step S51, ECU 22 examines whether the required reductant quantity dFn is equal to zero, or not.

When required reductant quantity dFn is equal to zero, ECU 22 proceeds to step S52, and determines engine efficiency ITA, by lookup from a map shown in step S52 of FIG. 11, in accordance with engine speed Ne and target fuel-air ratio TFBYA.

When required reductant quantity dFn is not equal to zero, then ECU 22 proceeds to step S53, and determines an ignition retard quantity rADV, by lookup from a map shown in step S53 of FIG. 11, in accordance with engine speed Ne and target torque TTC.

At step S54, ECU 22 retards the ignition timing by adding retard quantity rADV to ignition timing ADV determined at step S50.

At step S55, ECU 22 determines an engine efficiency ITA', by lookup from a map shown in step S55 of FIG. 11, in accordance with engine speed Ne and target fuel-air ratio TFBYA in the same manner as in step S52. Engine efficiency ITA' calculated at step S55 amounts to a slightly lower value, as compared to engine efficiency ITA calculated at step S52, for the same values of Ne and TFBYA. This is because the efficiency is decreased slightly by the retardation of the ignition timing.

At step S56, ECU 22 calculates target fresh air quantity Q in the same manner as in step S31 in the flowchart of FIGS. 8 and 9, in accordance with engine efficiency ITA (ITA'), target fuel-air ratio TFBYA and target torque TTC.

In this way, the exhaust purifying system of the third embodiment performs the retardation of ignition timing and the increase of intake air quantity (the increase of target fresh air quantity) at the time of reductant supply. As a result, the exhaust flow rate and exhaust temperature (catalyst temperature) increase, and the NOx release or desorption from catalyst 23 is accelerated (see FIGS. 3A and 3B).

Moreover, the system of the third embodiment may be arranged to supply the reducing agent even when NOx trap quantity becomes greater than or equal to a predetermined value (at which NOx trap performance becomes lower). In this case, the system can maintain the NOx trap performance at a higher level by promoting the NOx release or desorption and by regenerating the catalyst when the NOx trap ability of catalyst 23 nears its limit.

In the illustrated embodiments of the present invention, the exhaust purifying system includes an NOx release monitor section and a reductant supply section at least. The NOx release monitor section (19, 22, S2, S15) estimates the NOx release condition of the NOx trap (catalyst) by monitoring at least one of the temperature of the NOx trap catalyst (or the temperature of the exhaust), the flow rate of exhaust flowing through the NOx trap catalyst, and the NOx trap quantity. The reductant supply section (21, 22, S4, S6, S17, 10) supplies the reducing agent to the exhaust system with the special device 21 and/or the fuel supplying device 10 when the NOx trap is considered to be in the state of releasing NOx. During the supply of the reducing agent, the air-fuel ratio of the exhaust may be set to the stoichiometric ratio or rich ratio.

This application is based on a prior Japanese Patent Application No. 2001-141494 filed in Japan on May 11, 2001. The entire contents of this Japanese Patent Application No. No. 2001-141494 are hereby incorporated by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

**Claims**

1. Exhaust purifying system for an internal combustion engine, comprising:

  an NOx trap (18, 23, 111b) for trapping and releasing NOx;

  a NOx reducing catalyst (20,23,111 c) for reducing NOx with a reducing agent in exhaust; and
  a reductant supply section (21,22,10) for supplying the reducing agent to the NOx reducing catalyst;

wherein the NOx trap includes a component (18,23,111 b) for trapping NOx at low temperatures lower than or equal to 200°C and releasing NOx at higher temperatures;
**characterized in that** the exhaust purifying system further comprises a NOx release monitor section (19,22) for monitoring whether a NOx release condition of the NOx trap is satisfied, wherein the NOx release monitor section includes a temperature sensor (19), in the NOx trap (18,23,111 b), for sensing the temperature of the NOx trap (18,23,111b); and that the reductant supply section (21,22,10) is configured to supply the reducing agent when the NOx release condition is satisfied.

2. Exhaust purifying system according to claim 1, wherein the NOx trap includes a zeolite catalyst (18,23) containing zeolite.

3. Exhaust purifying system according to claim 1 or 2, wherein the reductant supply section (21,22,10) is arranged to supply the reducing agent on the upstream side of the NOx trap.

4. Exhaust purifying system according to at least one of claims 1 to 3, wherein the NOx reducing catalyst comprises a noble-metal catalyst (20.23.111c) and the NOx trap (18, 23, 111b) and the noble-metal catalyst (20, 23, 111c) are so arranged that NOx released from the NOx trap is reduced by the noble-metal catalyst (20,23,111 c).

5. Exhaust purifying system according to claim 4, wherein the NOx trap (23,111 b) and the noble-metal catalyst (23,111 c) are in the form of layers both formed on a single carrier, and the noble-metal catalyst is formed on a surface layer.

6. Exhaust purifying system according to claim 4 or 5, wherein the noble-metal catalyst (20) is disposed on a downstream side of the NOx trap (18).

7. Exhaust purifying system according to at least one of claims 1 to 6, wherein the exhaust purifying system further comprises a release promote section (22,553~555,11) for promoting the release of NOx from the NOx trap (18, 23, 111b) by varying at least one of an exhaust temperature and an exhaust flow rate.

8. Exhaust purifying system according to claim 7, wherein the release promote section (22,S53~S55,11) is operated when NOx is released from the NOx trap (18,23,111 b).

9. Exhaust purifying system according to claim 7 or 8, wherein the release promote section (22,S53~S55,11) is operated when a quantity of NOx trapped in the NOx trap (18,23,111b) is greater than or equal to a predetermined quantity.

10. Exhaust purifying system according to at least one of claims 1 to 9, wherein the reductant supply section (21,22,10) calculates a required reductant quantity (dFn) which is a quantity of the reducing agent for reducing NOx released from the NOx, and increases the quantity of the reducing quantity in the exhaust in accordance with the required reductant quantity.

11. Exhaust purifying method for an internal combustion engine equipped with an exhaust system including a NOx trap (18,23,111b) and a NOx reducing catalyst (20,23,111c), comprising:

   a reducing agent supplying step (S6) of supplying a reducing agent to the NOx reducing catalyst;

   **characterized in that**
   the exhaust purifying method further comprises a monitoring step (S2,S15) of monitoring whether a NOx release condition is satisfied, wherein the NOx release monitor section includes a temperature sensor (19), in the NOx trap (18,23,111b), for sensing the temperature of the NOx trap (18,23,111 b), for the NOx trap of a type for trapping NOx at low temperatures lower than or equal to 200°C and releasing NOx at higher temperatures; and
   that, in the reducing agent supplying step, the reducing agent is supplied when the NOx release condition is satisfied.

**Patentansprüche**

1. Abgasreinigungsvorrichtung für einen Verbrennungsmotor, umfassend:

   - eine NOx-Falle (18, 23, 111 b) zum Festhalten und Freisetzen von NOx;
   - einen NOx-Reduktionskatalysator (20, 23, 111 c) zur Reduktion von NOx mit einem Reduktionsmittel im Abgas; und
   - einen Reduktorzufuhr-Abschnitt (21, 22, 10) für die Zufuhr des Reduktionsmittels zum NOx-Reduktionskatalysator;

   wobei die NOx-Falle eine Komponente (18,23, 111 b) zum Binden von NOx bei niederen Temperaturen, niedriger als oder gleich 200°C, und zur Abgabe von NOx bei höheren Temperaturen umfasst,
**dadurch gekennzeichnet, dass**
die Abgasreinigungsvorrichtung weiterhin einen NOx-Abgabe-Überwachungsabschnitt (19, 22) umfasst, zur Überwachung, ob die NOx-Abgabebedingung in der NOx-Falle erfüllt ist, wobei der NOx-Überwachungsabschnitt in der NOx-Falle (18, 23, 111b) einen Temperaturfühler (19) enthält zur Erfassung der Temperatur in der NOx-Falle (18, 23, 111 b); und dass der Reduktorzufuhr-Abschnitt (21, 22, 10) so eingestellt ist, dass er das Reduktionsmittel zuführt, wenn die NOx-Abgabebedingung erfüllt ist.

2. Abgasreinigungsvorrichtung nach Anspruch 1, wobei die NOx-Falle einen Zeolith-Katalysator (18, 23) umfasst, der Zeolith enthält.

3. Abgasreinigungsvorrichtung nach Anspruch 1 oder 2, wobei der Reduktorzufuhr-Abschnitt (21, 22, 10) so angeordnet ist, dass das Reduktionsmittel auf der stromaufwärtigen Seite der NOx-Falle zugeführt wird.

4. Abgasreinigungsvorrichtung nach mindestens einem der Ansprüche 1 bis 3, wobei der NOx-Reduktionskatalysator einen Edelmetallkatalysator (20, 23, 111 c) und eine NOx-Falle (18, 23, 111 b) umfasst und der Edelmetallkatalysator (20, 23, 111 c) so angeordnet ist, dass das von der NOx-Falle abgegebene NOx durch den Edelmetallkatalysator (20, 23, 111 c) reduziert wird.

5. Abgasreinigungsvorrichtung nach Anspruch 4, wobei sowohl die NOx-Falle (23, 111 b) wie auch der Edelmetallkatalysator (23, 111 c) in Form von Schichten auf einem einzigen Träger gebildet sind und der Edelmetallkatalysator auf einer Oberflächenschicht gebildet ist.

6. Abgasreinigungsvorrichtung nach Anspruch 4 oder 5, in der der Edelmetallkatalysator (20) auf der stromabwärtigen Seite der NOx-Falle (18) angeordnet ist.

7. Abgasreinigungsvorrichtung nach mindestens einem der Ansprüche 1 bis 6, wobei die Abgasreinigungsvorrichtung weiterhin einen Abgabe-Unterstützungsabschnitt (22, S53 -- S55, 11) umfasst zur Unterstützung der Abgabe von NOx aus der NOx-Falle (18, 23, 111 b) durch Änderung der Abgas-Temperatur und/oder der Abgas-Durchflussmenge.

8. Abgasreinigungsvorrichtung nach Anspruch 7, wobei der Abgabe-Unterstützungsabschnitt (22, S53 - S55, 11) betrieben wird, wenn NOx aus der NOx-Falle (18, 23, 111b) abgegeben wird.

9. Abgasreinigungsvorrichtung nach Anspruch 7 oder 8, wobei der Abgabe-Unterstützungsabschnitt (22, S53 - S55, 11) betrieben wird, wenn eine Menge von NOx in der NOx-Falle (18, 23, 111 b) gebunden ist die größer als oder gleich einer vorbestimmten Menge ist.

10. Abgasreinigungsvorrichtung nach mindestens einem der Ansprüche 1 bis 9, wobei der Reduktorzufuhr-Abschnitt (21, 22, 10) die benötigte Reduktormenge (dFn) berechnet, welche die Menge des Reduktionsmittels für die Reduktion des NOx darstellt, das von der NOx-Falle abgegeben wird, und die Menge des Reduktionsmittels im Abgas steigert in Übereinstimmung mit der erforderlichen Reduktormenge.

11. Abgasreinigungsverfahren für einen Motor mit innerer Verbrennung, ausgerüstet mit einer Auspuffeinrichtung, die eine NOx-Falle (18, 23, 111b) und einen NOx reduzierenden Katalysator (20, 23, 111 c) enthält, umfassend:

einen Reduktionsmittelzufuhr-Schritt (S6) für die Zufuhr des Reduktionsmittels zum NOx- Reduktionskatalysator,

**dadurch gekennzeichnet, dass**
das Abgasreinigungsverfahren weiterhin einen Überwachungsschritt (S2, S15) umfasst zur Überwachung, ob die NOx-Abgabebedingung erfüllt ist, wobei der NOx-Abgabe-Überwachungsabschnitt einen Temperaturfühler (19) in der NOx-Falle (18, 23, 111 b) zur Erfassung der Temperatur in der NOx-Falle (18, 23, 111b) enthält für die NOx-Falle eines Typs zur Bindung von NOx bei niederer Temperatur, niedriger als oder gleich 200 °C, und zur Abgabe von NOx bei höherer Temperatur; und
dass beim Zufuhrschritt des Reduktionsmittels das Reduktionsmittel zugeführt wird, wenn die NOx-Abgabebedingung erfüllt ist.

**Revendications**

1. Système de purification des gaz d'échappement pour un moteur à combustion interne, comprenant:

un piège à NOx (18, 23, 111b) pour piéger et libérer les NOx;
un catalyseur de réduction des NOx (20, 23, 111c) pour réduire les NOx avec un agent réducteur dans le gaz d'échappement, et
une section d'apport en réducteur (21, 22, 10) pour fournir l'agent réducteur au catalyseur de réduction des NOx,
où le piège à NOx comprend un composant (18, 23, 111b) pour piéger les NOx aux faibles températures, inférieures ou égales à 200°C et libérer les NOx aux températures plus élevées,

**caractérisé en ce que** le système de purification des gaz d'échappement comprend en outre, une section de contrôle de la libération des NOx (19, 22) pour contrôler si une condition de libération des NOx du piège à NOX est satisfaite, où la section de contrôle de la libération des NOx comprend un capteur de température (19), dans le piège à NOx (18, 23, 111b), pour capturer la température du piège à NOx (18, 23, 111b), et
**en ce que** la section d'apport en réducteur (21, 22, 10) est configurée pour fournir l'agent réducteur lorsque la condition de libération des NOx est satisfaite.

2. Système de purification des gaz d'échappement selon la revendication 1, dans lequel le piège à NOx comprend un catalyseur zéolite (18, 23) contenant une zéolite.

3. Système de purification des gaz d'échappement selon la revendication 1 ou 2, dans lequel la section d'apport de réducteur (21, 22, 10) est disposé pour fournir l'agent réducteur sur le côté en amont du piège à NOx.

4. Système de purification des gaz d'échappement selon au moins une des revendications 1 à 3, dans lequel le catalyseur de réduction des NOx comprend un catalyseur à métal noble (20, 23, 111c), et le piège à NOx (18, 23, 111b) et le catalyseur à métal noble (20, 23, 111c) sont disposés de sorte que les NOx libérés du piège à NOx sont réduits par le catalyseur à métal noble (20, 23, 111c).

5. Système de purification des gaz d'échappement selon la revendication 4, dans lequel le piège à NOx (23, 111b) et le catalyseur à métal noble (23, 111c) sont sous la forme de couches, formées sur un support unique, et le catalyseur à métal noble est sur une couche de surface.

6. Système de purification des gaz d'échappement selon la revendication 4 ou 5, dans lequel le catalyseur à métal noble (20) est disposé sur un côté en aval du piège à NOx (18).

7. Système de purification des gaz d'échappement selon au moins une des revendications 1 à 6, dans lequel le système de purification des gaz d'échappement comprend en outre, une section favorisant la libération (22, S53-555, 11) pour favoriser la libération des NOx depuis le piège à NOx (18, 23, 111b) en variant au moins un de la température d'échappement et du débit d'échappement.

8. Système de purification des gaz d'échappement selon la revendication 7, dans lequel la section favorisant la libération (22, S53-S55, 11) est mise en fonctionnement lorsque les NOx sont libérés du piège à NOx (18, 23, 111b) .

9. Système de purification des gaz d'échappement selon la revendication 7 ou 8, dans lequel la section favorisant la libération (22, S53-S55, 11) est mise en fonctionnement lorsqu'une quantité de NOx piégés dans le piège à NOx (18, 23, 111b) est supérieure ou égale à une quantité prédéterminée.

10. Système de purification des gaz d'échappement selon au moins une des revendications 1 à 9, dans lequel la section d'apport de réducteur (21, 22, 10) calcule une quantité requise de réducteur (dFn), qui est une quantité d'agent réducteur pour réduire les NOx libérés du piège à NOx, et augmente la quantité de la quantité de réduction dans le gaz d'échappement selon la quantité requise de réducteur.

11. Procédé de purification des gaz d'échappement pour un moteur à combustion interne, équipé d'un système de gaz d'échappement comprenant un piège à NOx (18, 23, 111b) et un catalyseur de réduction des NOx (20, 23, 111c), comprenant une étape d'apport d'agent réducteur (S6) d'apport d'un agent réducteur au catalyseur de réduction des NOx,
**caractérisé en ce que** le procédé de purification des gaz d'échappement comprend une étape de contrôle (S2, S15) pour contrôler si une condition de libération des NOx est satisfaite, où la section de contrôle de la libération des NOx comprend un capteur de température (19), dans le piège à NOx (18, 23, 111b), pour le piège à NOx, étant du type pour piéger les NOx à des températures inférieures ou égales à 200°C et libérer les NOx à températures plus élevées, et
**en ce que** dans l'étape d'apport d'agent réducteur, l'agent réducteur est fourni lorsque la condition de libération des NOx est satisfaite.

# FIG.1

CRANK ANGLE

TEMPERATURE

ACCELERATOR OPENING

ECU

EP 1 256 700 B1

# FIG.2

```
              ( START )
                  │
  S1 ┌────────────▼────────────┐
     │    READ CATALYST        │
     │    TEMPERATURE Tc        │
     └────────────┬────────────┘
                  │
  S2          ◇───▼───◇
         ◇               ◇         NO
      ◇     Tc ≧ TcL?      ◇──────────────────┐
         ◇               ◇                     │
             ◇───┬───◇                         │
                 │ YES                          │
  S3          ◇──▼───◇                          │
         ◇               ◇         NO           │
      ◇    tFn ≦ tFn1?     ◇───────────────┐    │
         ◇               ◇                 │    │
             ◇───┬───◇                     │    │
                 │ YES                      ▼    ▼
  S4 ┌───────────▼───────────┐   S7 ┌──────────────────────┐
     │  CALCULATE TARGET      │      │      TARGET           │
     │  REDUCTANT QUANTITY dFn │      │ REDUCTANT QUANTITY dFn=0│
     └───────────┬───────────┘      └──────────┬───────────┘
  S5 ┌───────────▼───────────┐   S8 ┌──────────▼───────────┐
     │ ACCUMULATED REDUCTANT  │      │ ACCUMULATED REDUCTANT │
     │   SUPPLY QUANTITY       │      │    SUPPLY QUANTITY     │
     │  tFn (+1) ← tFn+dFn     │      │       tFn ← 0         │
     └───────────┬───────────┘      └──────────┬───────────┘
                 │◄───────────────────────────┘
  S6 ┌───────────▼───────────┐
     │  SUPPLY REDUCING AGENT  │
     └───────────┬───────────┘
                 │
            ( RETURN )
```

**FIG.3A**

NOx
RELEASE
RATE

HIGH

TcL

LOW ◄───── CATALYST
TEMPERATURE Tc ───► HIGH

**FIG.3B**

NOx
RELEASE
RATE

HIGH

LOW ◄───── EXHAUST
FLOW RATE ───► HIGH

**FIG.3C**

NOx
RELEASE
RATE

HIGH

SMALL ◄───── NOx TRAP
QUANTITY ───► GREAT

# FIG.4

CRANK ANGLE

TEMPERATURE

ACCELERATOR OPENING

ECU

22

15

6

14

16

17

13

12

10

8

7

11

23

19

2

3

4

5

EP 1 256 700 B1

# FIG.5

```
                    ┌─────────────┐
                    │    START    │
                    └──────┬──────┘
                           │
                           ▼
      ┌────────────────────────────────────────────┐
      │        TARGET FUEL-AIR RATIO TFBYA          │
      │              ENGINE SPEED Ne                │
S11   │           INTAKE AIR QUANTITY Qa            │
      │     ENGINE COOLANT TEMPERATURE Tw           │
      │         CATALYST TEMPERATURE Tc'            │
      └────────────────────┬───────────────────────┘
                           │
                           ▼
      ┌────────────────────────────────────────────┐
S12   │              ESTIMATE NOx                   │
      │          DISCHARGE QUANTITY Vn              │
      └────────────────────┬───────────────────────┘
                           │
                           ▼
      ┌────────────────────────────────────────────┐
S13   │              ESTIMATE NOx                   │
      │            TRAP QUANTITY dtn                │
      └────────────────────┬───────────────────────┘
                           │
                           ▼
      ┌────────────────────────────────────────────┐
S14   │            TOTAL NOx QUANTITY               │
      │              tn' ← tn+dtn                   │
      └────────────────────┬───────────────────────┘
                           │
                           ▼
      ┌────────────────────────────────────────────┐
S15   │              ESTIMATE NOx                   │
      │          RELEASE QUANTITY ddn               │
      └────────────────────┬───────────────────────┘
                           │
                           ▼
      ┌────────────────────────────────────────────┐
S16   │          REMAINING NOx QUANTITY             │
      │             tn (+1) ← tn'-ddn               │
      └────────────────────┬───────────────────────┘
                           │
                           ▼
      ┌────────────────────────────────────────────┐
S17   │     REQUIRED REDUCTANT QUANTITY dFn         │
      │          ← CX (ddn+Vn-dtn)                  │
      └────────────────────┬───────────────────────┘
                           │
                           ▼
                    ┌─────────────┐
                    │   RETURN    │
                    └─────────────┘
```

**FIG.6A**

**FIG.6B**

**FIG.6C**

**FIG.7A** NOx TRAP RATE

HIGH

LOW ← CATALYST TEMPERATURE Tc → HIGH

**FIG.7B** NOx TRAP RATE

HIGH

LOW ← EXHAUST FLOW → HIGH

**FIG.7C** NOx TRAP RATE

HIGH

SMALL ← NOx TRAP QUANTITY → GREAT

# FIG.8

START

S21 —
ACC. OPENING Aps
ENGINE SPEED Ne
INTAKE AIR QUANTITY Qa
ENGINE COOLANT TEMP. Tw
CATALYST TEMP. Tc'
REDUCTANT QUANTITY dFn

S22 —
TARGET TORQUE TTC

TTC

Aps

S23 —
COMBUSTION FLAG FCmb

TTC

0   1   2

Ne

S24 —
dFn = 0?   NO

YES

S25 —
Tw ≧ TwL?   NO

YES

S26
FCmb ← 2

1

# FIG.9

① 

S27 — FCmb ≠ 2?

NO → TFBYA ← 1  S29

YES ↓

**TARGET FUEL-AIR RATIO TFBYA**

S28

TTC

Aps

**ENGINE EFFICIENCY ITA**

S30

TFBYA

ITA

Ne

S31 — **TARGET FRESH AIR QUANTITY**
**Q = TTC/TFBYA/ITA**

( RETURN )

# FIG.10

```
                    ┌─────────────┐
                    │    START    │
                    └─────────────┘
                           │
                           ▼
         ┌──────────────────────────────────┐
         │         ACC. OPENING Aps          │
         │         ENGINE SPEED Ne           │
  S41    │     INTAKE AIR QUANTITY Qa        │
         │     ENGINE COOLANT TEMP. Tw       │
         │       CATALYST TEMP. Tc'          │
         │     REDUCTANT QUANTITY dFn        │
         └──────────────────────────────────┘
                           │
                           ▼
         ┌──────────────────────────────────┐
  S42    │           CALCULATE               │
         │        TARGET TORQUE TTC          │
         └──────────────────────────────────┘
                           │
                           ▼
         ┌──────────────────────────────────┐
  S43    │           CALCULATE               │
         │      COMBUSTION FLAG FCmb         │
         └──────────────────────────────────┘
                           │
                           ▼
  S44          ◇ dFn = 0? ◇────── NO ──────┐
                     │                       │
                    YES                      │
                     │                       │
  S45          ◇ Tw ≧ TwL? ◇────── NO ──────┤
                     │                       │
                    YES                      ▼
                     │        ┌──────────────────────────┐
                     │   S46  │       FCmb ← 2           │
                     │        └──────────────────────────┘
                     │◄─────────────────────┘
                     ▼
  S47          ◇ FCmb ≠ 2? ◇────── NO ──────┐
                     │                       │
                    YES                      ▼
                     ▼        ┌──────────────────────────┐
  S48 ┌──────────────────────┐│   S49    TFBYA ← 1       │
      │      CALCULATE        │└──────────────────────────┘
      │ TARGET FUEL-AIR RATIO │          │
      │        TFBYA          │          │
      └──────────────────────┘◄─────────┘
                     │
                     ▼
                    ( 2 )
```

# FIG.11

(2)

S50 — CALCULATE
IGNITION TIMING ADV

S51 — dFn = 0?

NO

YES

S53 — RETARD rADV

TTC

Ne

S52 — ENGINE EFFICIENCY ITA

TFBYA

ITA

Ne

S54 — ADV ← ADV+rADV

S55 — ENGINE EFFICIENCY ITA'

TFBYA

ITA'

Ne

S56 — TARGET FRESH AIR QUANTITY
Q = TTC/TFBYA/ITA

RETURN

# FIG.12

111c
111b
111a